# EUROPEAN PATENT SPECIFICATION

(11) **EP 2 584 814 B1**
(45) Date of publication and mention of the grant of the patent: **02.05.2018**
(21) Application number: 11800106.4
(22) Date of filing: 27.05.2011
(51) Int. Cl.: H04W 8/24, H04W 88/12, H04W 24/08

(54) **METHOD AND RADIO NETWORK CONTROL FOR TRACKING THE INTERNATIONAL MOBILE STATION EQUIPMENT IDENTITY OF USER EQUIPMENT**
VERFAHREN UND FUNKNETZWERKSTEUERUNG ZUR VERFOLGUNG DER IDENTITÄT EINER INTERNATIONALEN MOBILSTATIONSAUSRÜSTUNG EINER BENUTZEREINRICHTUNG
PROCÉDÉ ET CONTRÔLEUR DE RÉSEAU RADIO POUR SUIVI DE L'IDENTITÉ INTERNATIONALE D'ÉQUIPEMENT MOBILE D'UN ÉQUIPEMENT UTILISATEUR

(30) Priority: 28.06.2010 CN 201010211050
(43) Date of publication of application: 24.04.2013
(73) Proprietor: ZTE Corporation, Shenzhen, Guangdong 518057 (CN)
(72) Inventor: LI, Qun, Shenzhen Guangdong 518057 (CN); ZHAO, Minghe, Shenzhen Guangdong 518057 (CN)
(74) Representative: V.O.
(86) International application number: PCT/CN2011/074808
(87) International publication number: WO 2012/000361

(56) References cited:
- EP-A1- 2 160 049
- CN-A- 101 018 413
- CN-A- 101 087 465
- CN-C- 100 417 112
- US-A1- 2004 147 242
- US-A1- 2006 094 478
- "Digital cellular telecommunications system (Phase 2+); Universal Mobile Telecommunications System (UMTS); LTE; Telecommunication management; Subscriber and equipment trace; Trace control and configuration management (3GPP TS 32.422 version 9.0.1 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V9.0.1, 1 January 2010 (2010-01-01), XP014045837,

## Description

### TECHNICAL FIELD

The disclosure relates to a method and a Radio Network Controller (RNC) for radio communication tracking, and more particularly to a method and a RNC for tracking an International Mobile Equipment Identity (IMEI) of User Equipment (UE) by the RNC in a 3^{rd} generation (3G) mobile communication system.

### BACKGROUND

A platform that develops more services is provided by 3G mobile communication technologies, and a terminal user is able to enjoy data services while using traditional voice services. Thus, higher requirements are proposed for network and terminal performances, so that network configurations need to be optimized constantly and terminal performance needs to be improved constantly.

In existing network operation and maintenance analysis methods, some commonly-used methods, such as drive test, performance statistics and the like, are posteriori analysis methods and have the following disadvantage: events that have happened cannot be truly recovered. For example, an important client complains about a call drop and a network optimization engineer performs testing on site, but one common and bad situation is that there is no way to analyze and solve a problem without recurrence of the problem; when the network optimization engineer further checks statistics of a Key Performance Indicator (KPI) of an operation and maintenance center, the indicator may be very good, but the problem still cannot be located because detailed information during the call of the client is not recorded by the system.

In addition, since all alarm and performance counters in the existing network operation and maintenance analysis methods are to reflect network operation conditions based on equipments of a network system, all alarm and performance counters cannot reflect specific details of each call of different types of terminal equipments in networks, and cannot also perform statistics on KPI and perform probability distribution analysis, on the basis of user granularity grouping, based on terminal equipment types.

A RNC, as an intermediate link of system equipments at a network side, is responsible for managing and distributing radio resources of a Uu interface and ground transmission bearer resources of lub, lu and lur interfaces. In a process of a user call, the RNC is able to perform recording and tracking on an International Mobile Subscriber Identity (IMSI) of UE, and signalling and data bearer establishment and transmission processes; moreover, since the RNC is faced to UEs of different terminal types of the whole network, the network performance and performance of the IMSIs of different UEs in the network are acquired related data by the RNC to generate a user call log; so that KPI statistics and analysis of network operation conditions can be performed based on the terminal user and the network.

An IMEI, which is one of identities of UE in a network, is also known as a serial number, and the most important function of the IMEI is to help identify a mobile phone.

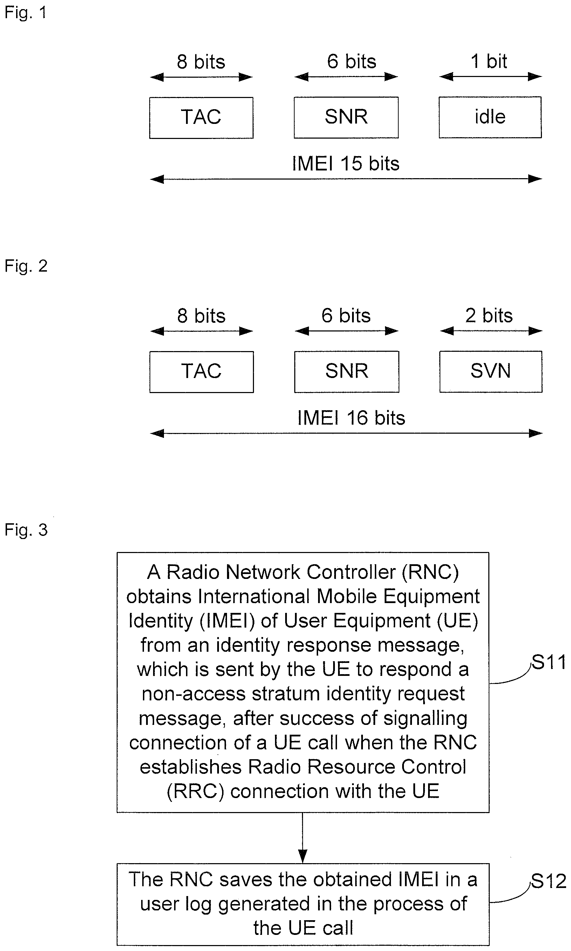

As specified in the 3^{rd} Generation Partnership Project 25.003 (3GPP 25.003), the IMEI has the following two definitions: IMEI and IMEI Software Version (IMEISV), wherein the structure of the IMEI is as shown in Fig. 1 and is composed of 15 digits, in which a Type Allocation Code (TAC) takes up 6 digits, a Final Assembly Code (FAC) takes up 2 digits, a Serial Number (SNR), which is a unique serial number for a TAC of a certain model, takes up 6 digits, and the remaining idle digit is transmitted by a terminal and is generally used for a check digit which is used for checking 14 digits formed by the TAC, the FAC and the SNR.

The IMEISV is composed of an IMEI and a Software Version Number (SVN), wherein the SVN indicates the software version number of an IMEI device and an IMEISV structure is as shown in Fig. 2: in the structure, the former 14 digits is the IMEI structure, the fifteen digit is a check bit, and the last two digits are added and used as an SVN which is distributed by a manufacturer.

Therefore, the IMEI is composed of 15 digits or 17 digits. Generally, the TAC indicates a manufacturer model of a terminal; the FAC indicates a manufacturer which finally assembles the terminal, each manufacturer has its specific code and the specific code is not a code which indicates the country where the terminal is manufactured. Therefore, the FAC can be further regarded as a code of place of origin of the terminal.

The RNC cannot obtain IMEI information directly when acquiring information of the process of user call; if the RNC can record the IMEI information and refer to the user log generated in the process of user call, statistics can be performed according to manufacturers, models and version information corresponding to terminal equipments, 2 so as to obtain performances of different types of terminal equipments in the network and urge terminal version upgrading, technical improvement and troubleshooting.

Document US2006/094478A1 discloses a method and apparatus for determining when power saving functions are not beneficial to a mobile communication device and then limiting or inhibiting the use of power saving functions. Information received either from an external entity or information stored in the mobile communication device is utilized to determine if power saving functions are beneficial. The mobile communication device and or network with which the mobile communication device communicates may alter their behaviour in order to not perform unnecessary power saving functions.

Document "Digital cellular telecommunications system (Phase 2+); Universal Mobile Telecommunications System (UMTS); LTE; Telecommunication management; Subscriber and equipment trace; Trace control and configuration management (3GPP TS 32.422 version 9.0.1 Release 9), discloses that in E-UTRAN, after the Cell traffic Trace has been activated in the monitored cell(s), the eNodeB shall start a Trace Recording Session for new call(s)/session(s) and for already existing call(s)/session(s) (events for existing call(s)/session(s) are not required to be recorded prior to the activation of the cell traffic trace). When the eNodeB starts a Trace Recording Session it shall allocate a Trace Recording Session Reference for the given call or session. The eNodeB shall send the allocated Trace Recording Session Reference, and the Trace Reference and the Trace Collection Entity address in the CELL TRAFFIC TRACE message to the MME via the S1 connection. When MME receives this new S1 signalling message containing the Trace Recording Session Reference and Trace Reference, the MME shall look up the IMSI/IMEI(SV) of the given call from its database and shall send the IMSI/IMEI(SV) numbers together with the Trace Recording Session Reference and Trace Reference to the Trace Collection Entity.

The document EP2160049A1 discloses that in a 3GPP UMTS and/or GSM network the subscriber identity IMSI and the MS/UE identity IMEI, in spite of being not required at the access network for speech and data calls, they can be nonetheless acquired by a controller either BSC or RNC which simulating the behaviour of the MSC sends an IDENTITY_REQUEST message to the MS/UE, differently from the current specifications where this message is sent only by the Core Network transparently to the BSC/RNC. At the reception of the IDENTITY_REQUEST the MS/UE increments the send sequence number N(SD) included in the IDENTITY_RESPONSE message and sends it to the requester with the requested IMSI/IMEI. The BSC/RNC, at the reception of the IDENTITY_RESPONSE message, transmits a neutral MM_NULL standard message to the Core Network. The latter, ignores the MM_NULL message but increments the value of N(SD) at the network side to avoid of discarding a subsequent message from the MS/UE. The procedure can be repeated for collecting the identities IMSI/IMEI of all MSs/UEs for localization aims and/or mobility management.

### SUMMARY

The main purpose of the subject disclosure is to provide a method and a RNC for tracking an IMEI of UE by the RNC, to solve the problem that the RNC cannot obtain IMEI information directly.

According to one aspect of the subject disclosure, a method for tracking an International Mobile Equipment Identity (IMEI) of UE is provided, which includes: when a RNC establishes Radio Resource Control (RRC) connection with the UE, the RNC obtains an IMEI of UE from an identity response message, which is sent by the UE to respond a non-access stratum identity request message, after success of signalling connection of a UE call; and the RNC saves the obtained IMEI in a user log generated in a process of the UE call;
wherein the user log comprises a user identifier and signalling tracking of key behaviours; the signalling tracking of key behaviours comprises: switching of a process of UE call, redistribution of radio resources, cell update-related lub interfaces, Uu interfaces and lu interface signalling.

Wherein, the success of the signalling connection may refer to success of lu interface packet domain signalling connection or success of lu interface circuit domain signalling connection.

Wherein, the success of the signalling connection may refer to success of lu interface packet domain signalling connection succeeds; that the RNC obtains the IMEI of the UE from the identity response message, which is sent by the UE to respond the non-access stratum identity request message may include:
the RNC simulates the non-access stratum identity request message and issues the non-access stratum identity request message to the UE;
the UE returns an identity response message containing the IMEI to the RNC after receiving the non-access stratum identity request message; and the RNC obtains the IMEI from the identity response message.

Wherein, the success of the signalling connection may refer to success of lu interface circuit domain signalling connection succeeds; that the RNC obtains the IMEI of the UE from the identity response message, which is sent by the UE to respond the non-access stratum identity request message may include:
the RNC simulates the non-access stratum identity request message and issues the non-access stratum identity request message to the UE;
after receiving the non-access stratum identity request message, the UE returns an identity response message containing the IMEI to the RNC;
the RNC obtains the IMEI from the identity response message; and
the RNC reads an uplink serial number filled in by the UE in the identity response message and sends a null operation compensation message about the uplink serial number to a Core Network (CN).

Wherein, before the RNC obtains the IMEI of the UE from the identity response message, which is sent by the UE to respond the non-access stratum identity request message, the method may further include:
the RNC detects an establishment reason of the UE call, and determines that the IMEI needs to be obtained in the UE call.

Wherein, that the RNC obtains the IMEI of the UE from the identity response message, which is sent by the UE to respond the non-access stratum identity request message may include:
a CN issues the non-access stratum identity request message to the UE;
after receiving the non-access stratum identity request message, the UE returns an identity response message containing the IMEI to the RNC;
the RNC obtains the IMEI from the identity response message; and
the RNC further reports the identity response message to the CN.

Wherein, after the RNC saves the obtained IMEI in the user log generated in the process of the UE call, the method may further include:
a network operation and maintenance analysis system generates an International Mobile Subscriber Identity (IMSI) and IMEI comparison table used for user system maintenance according to IMEI information; or
the network operation and maintenance analysis system updates an IMSI and IMEI comparison table used for user system maintenance according to the IMEI information.

According to another aspect of the disclosure, a RNC for tracking an IMEI of UE is provided, which includes: an obtaining module and a storage module, wherein
the obtaining module is configured to, when a RNC establishes RRC connection with the UE, obtain an IMEI of UE from an identity response message, which is sent by the UE to respond a non-access stratum identity request message, after success of signalling connection of a UE call; and
the storage module is configured to save the obtained IMEI in a user log generated in a process of the UE call;
wherein the user log comprises a user identifier and signalling tracking of key behaviours; the signalling tracking of key behaviours comprises: switching of a process of UE call, redistribution of radio resources, cell update-related lub interfaces, Uu interfaces and lu interface signalling.

Wherein, the obtaining module may further include: a request module and a receiving module, wherein
the request module may be configured to simulate the non-access stratum identity request message and issue the non-access stratum identity request message to the UE;
the receiving module may be configured to receive the identity response message containing the IMEI returned by the UE;
and, when the success of the signalling connection of the UE call refers to success of lu interface circuit domain signalling connection, the RNC may further include: a reading module and a sending module, wherein
the reading module may be configured to read an uplink serial number filled in by the UE in the identity response message; and
the sending module may be configured to send a null operation compensation message of the uplink serial number to a CN.

Wherein, the RNC may further include: a detecting module configured to detect an establishment reason of the UE call and start the obtaining module after determining that the IMEI needs to be obtained in the UE call.

Compared with the prior art, the disclosure has the following beneficial effects:
1. according to the disclosure, when a RNC establishes RRC connection with UE, the RNC obtains the IMEI of the UE from the identity response message, which is sent by the UE to respond the non-access stratum identity request message after the signalling connection of the user call succeeds; then the RNC saves the obtained IMEI in a user log generated in a process of the UE call; in this way, the network operation and maintenance analysis system can track the IMEI according to the user log to reflect specific details of each call of different types of terminal equipments, and perform statistical analysis on the KPI based on terminal type grouping;
2. the RNC starts an acquisition process used for distinguishing call types when obtaining the IMEI of the UE, and the RNC needs to detect the establishment reason of the user call to determine whether to start a process of obtaining the IMEI, to avoid additional call delay and air interface load as much as possible; and
3. in the process in which the RNC obtains the IMEI of the UE, air interface load caused by repeated transmission of signalling can further be prevented by intercepting CN IMEI acquisition.

According to the disclosure, after obtaining the IMEI, the RNC saves the obtained IMEI in a user log generated in a process of a UE call, wherein the user log records user behaviour statistic information of the call process and user characteristic information in detail. The network operation and maintenance analysis system is able to generate or update an IMSI and IMEI comparison table used for maintenance based on user identity information of the user log. The network operation and maintenance analysis system performs statistical analysis based on networks and user equipment identities such as manufacturers, terminal types and versions by relating the user identity information in the user log with the comparison table, thereby improving accuracy of the network operation and maintenance analysis system and facilitating network maintenance.

### BRIEF DESCRIPTION OF THE DRAWINGS

Fig. 1 is a structural diagram of IMEI in the prior art;
Fig. 2 is a structural diagram of IMEISV in the prior art;
Fig. 3 is a flowchart of a method for tracking IMEI of UE according to the disclosure;
Fig. 4 is a flowchart of obtaining IMEI by simulating a packet domain of a non-access stratum message by a RNC according to the disclosure;
Fig. 5 is a flowchart of obtaining IMEI by simulating a circuit domain of a non-access stratum message by a RNC according to the disclosure; and
Fig. 6 is a structural diagram of connection of a RNC for tracking IMEI of UE with a CN and UE according to the disclosure.

### DETAILED DESCRIPTION

Preferred embodiments of the disclosure will be described in detail in conjunction with the accompanying drawings hereinafter. It should be understood that the preferred embodiments illustrated below are only used for illustrating and explaining the disclosure instead of limiting the disclosure.

The disclosure is based on 3G mobile wireless communication systems and is applicable to distributed systems and centralized systems. A RNC starts a process of obtaining IMEI and saves the obtained IMEI in a user log generated in a process of a UE call, wherein the user log records user behaviour statistic information of the call process and user characteristic information in detail; and the RNC performs statistical analysis on the stored user log based on networks and user equipment identities, specifically, generating a network user failure reason distribution based on a cell and a base station, performing probability distribution statistics on failure problems based on a terminal equipment type to which the IMEI belongs, and detecting whether the different types of terminal equipments are terminal equipments in which some failure problems occur frequently.

During specific operations, the RNC starts a process for obtaining IMEI of UE according to configuration of acquisition application scenarios, wherein the application scenarios include: acquisition for processes of all UE call types, acquisition started based on processes of different call types, interception of CN IMEI acquisition processes, no acquisition and the like;
the acquisition for processes of all UE call types refers to: a RNC will start an IMEI obtaining process as long as UE requests for establishing connection with the RNC;
the acquisition started based on processes of different call types refers to: a RNC needs to detect a establishment reason of a UE call to determine whether to start an IMEI obtaining process, for example, the RNC may designate to start specific processes including IMEI acquisition and the like only in a location area updating process, a routing area updating process and an attachment request process, thereby avoiding additional call delay and air interface load as much as possible;
the interception of CN IMEI acquisition processes refers to: a CN starts an IMEI signalling obtaining process. A RNC performs non-access stratum decoding, intercepts an IMEI response message fed by UE to the CN, and reads and saves IMEI information; and
no acquisition refers to: a RNC does not start an IMEI acquisition process.

A preferred embodiment of the technical solution is described in detail in conjunction with the accompanying drawings hereinafter. As shown in Fig. 3, a method for tracking IMEI of UE includes:
S11: when a RNC establishes RRC connection with the UE, the RNC obtains the IMEI of the UE from an identity response message, which is sent by the UE to respond a non-access stratum identity request message, after success of signalling connection of a UE call; and
S12: the RNC saves the obtained IMEI in a user log generated in a process of the UE call,
wherein the success of the signalling connection in S11 refers to success of lu interface packet domain signalling connection or success of lu interface circuit domain signalling connection. The RNC simulates a signalling process for obtaining IMEI by a non-access stratum to distinguish a circuit domain and a packet domain, if either one of the circuit domain and the packet domain obtains the IMEI successfully, then the other domain will not trigger an IMEI obtaining process, thereby reducing call delay and air interface load.

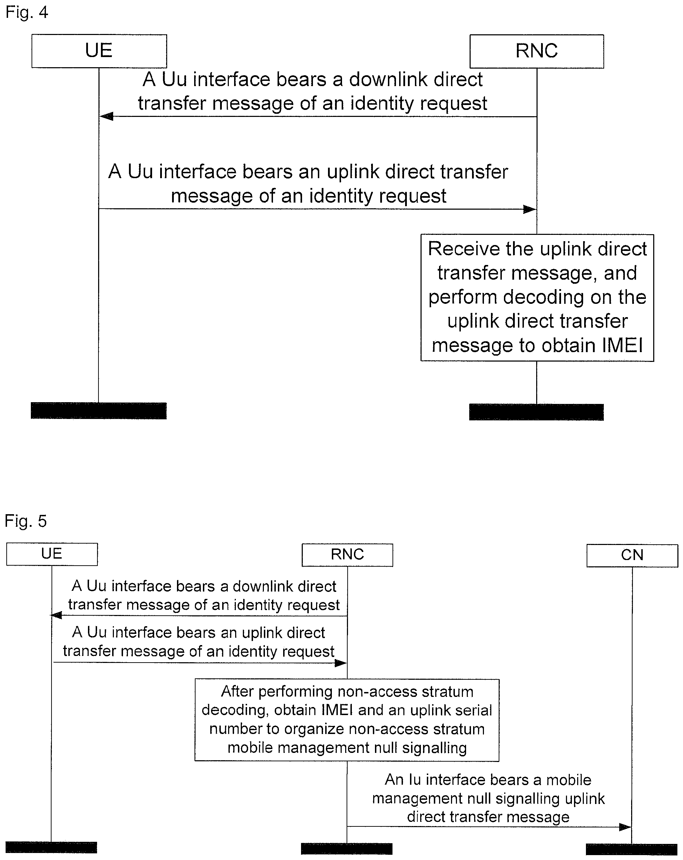

A process in which a RNC simulates a non-access stratum to obtain IMEI by a packet domain in actual applications will be introduced in detail hereinafter. The scenario of acquiring processes for all UE call types in the packet domain is: in the case of success of lu interface packet domain signalling connection,
if a CN does not start an authentication process, then the RNC directly simulates a non-access stratum Identity Request message initiatively by a Uu interface to request for an IMEI downlink direct transfer message for the UE;
as shown in Fig. 4, if the CN starts an authentication process, then the RNC further needs to complete a Uu interface safe mode process, subsequently, the RNC directly simulates a non-access stratum Identity Request message initiatively by a Uu interface to request for an IMEI downlink direct transfer message for the UE;
after receiving the non-access stratum Identity Request message, the UE regards it as a CN request, and directly sends an uplink direct transfer message carrying IMEI responding to an Identity Response message to the RNC;
the RNC obtains the IMEI from the uplink direct transfer message of the UE responding to the Identity Response message; and
the RNC receives the uplink direct transfer message, and performs non-access stratum decoding on the uplink direct transfer message to obtain the IMEI.

The scenario of the acquisition started based on processes of different call types is: in the case of success of lu interface packet domain signalling connection, a RNC detects a establishment reason of a UE call and determines that IMEI needs to be obtained in the UE call.

If a CN does not start an authentication process, then the RNC directly simulates a non-access stratum Identity Request message initiatively by a Uu interface to request for an IMEI downlink direct transfer message for the UE;
if the CN starts an authentication process, then the RNC further needs to complete a Uu interface safe mode process, subsequently, the RNC directly simulates a non-access stratum Identity Request message initiatively by a Uu interface to request for an IMEI downlink direct transfer message for the UE;
after receiving the non-access stratum Identity Request message, the UE regards it as a CN request, and directly sends an uplink direct transfer message carrying IMEI responding to the Identity Response message to the RNC;
the RNC obtains the IMEI from the uplink direct transfer message of the UE responding to the Identity Response message; and
the RNC receives the uplink direct transfer message, and performs non-access stratum decoding on the uplink direct transfer message to obtain the IMEI.

The scenario of the interception of CN IMEI acquisition processes is: in the case of success of lu interface packet domain signalling connection, that the RNC obtains the IMEI of the UE from the identity response message, which is sent by the UE to respond the non-access stratum Identity Request message includes the following sub-steps:
a CN performs downlink transfer on the non-access stratum Identity Response message to the UE;
after receiving the non-access stratum Identity Response message, the UE returns an identity response message containing IMEI to the RNC;
the RNC obtains the IMEI from the identity response message; and
the RNC further reports the identity response message to the CN.

In actual applications, a process in which a RNC simulates a non-access stratum to obtain IMEI by a circuit domain is performed in several cases as follows:
the scenario of the acquisition of processes for all UE call types in the circuit domain is: in the case of success of lu interface circuit domain signalling connection,
if a CN does not start an authentication process, then the RNC directly simulates a non-access stratum Identity Request message initiatively by a Uu interface to request for an IMEI downlink direct transfer message for the UE;
as shown in Fig. 5, if the CN starts an authentication process, then the RNC further needs to complete a Uu interface safe mode process, subsequently, the RNC directly simulates a non-access stratum Identity Request message initiatively by a Uu interface to request for an IMEI downlink direct transfer message for the UE;
after receiving the non-access stratum Identity Request message, the UE regards it as a CN request, and directly sends an uplink direct transfer message carrying IMEI responding to an identity response message to the RNC;
the RNC obtains the IMEI from the uplink direct transfer message of the UE responding to the Identity Response message; the RNC receives the uplink direct transfer message, and performs non-access stratum decoding on the uplink direct transfer message to obtain the IMEI;
the RNC reads an uplink serial number filled in by the UE in the uplink direct transfer message of the UE responding to the Identity Response message; and
the RNC simulates a Mobility Management NULL (MM NULL) signalling in the non-access stratum carrying the uplink serial number, and sends the MM NULL signalling via a circuit domain lu interface to the CN to be updated.

Here, to align a CN uplink signalling serial number, the RNC needs to compensate additional uplink serial numbers generated by the UE in the process of simulation of IMEI acquisition at a local side, and after intercepting the Identity Response message, and insert one MM NULL message which carries the uplink serial number generated by the UE to deliver the uplink serial number to the CN to be updated.

The scenario of the acquisition started based on processes of different call types is: in the case of success of lu interface circuit domain signalling connection, the RNC detects a establishment reason of a UE call and determines that IMEI needs to be obtained in the UE call;
if a CN does not start an authentication process, then the RNC directly simulates a non-access stratum Identity Request message initiatively by a Uu interface to request for an IMEI downlink direct transfer message for the UE;
if the CN starts an authentication process, then the RNC further needs to complete a Uu interface safe mode process, subsequently, the RNC directly simulates a non-access stratum Identity Request message initiatively by a Uu interface to request for an IMEI downlink direct transfer message for the UE;
after receiving the non-access stratum Identity Request message, the UE regards it as a CN request, and directly sends an uplink direct transfer message carrying IMEI responding to the Identity Response message to the RNC;
the RNC obtains the IMEI from the uplink direct transfer message of the UE responding to the Identity Response message; the RNC receives the uplink direct transfer message, and performs non-access stratum decoding on the uplink direct transfer message to obtain the IMEI;

The RNC reads an uplink serial number filled in by the UE in the uplink direct transfer message of the UE responding to the Identity Response message; and
the RNC simulates an MM NULL signalling in the non-access stratum carrying the uplink serial number, and sends the MM NULL signalling by a circuit domain lu interface to the CN to be updated.

The scenario of the interception of CN IMEI acquisition processes is: in the case of success of lu interface circuit domain signalling connection, that the RNC obtains the IMEI of the UE from the identity response message, which is sent by the UE to respond the non-access stratum Identity Request message includes the following sub-steps:
a CN performs downlink transfer on the non-access stratum Identity Response message to the UE;
after receiving the non-access stratum Identity Response message, the UE returns an identity response message containing IMEI to the RNC;
the RNC obtains the IMEI from the identity response message; and
the RNC further reports the identity response message to the CN.

After the RNC saves the obtained IMEI in the user log generated in the process of the UE call, a network operation and maintenance analysis system generates or updates an IMSI and IMEI comparison table used for user system maintenance according to IMEI information, and generates statistics and analysis associated with KPIs based on network and user equipment identities via user logs of the whole network. Here, the user equipment identities include: manufacturers, terminal types and software versions.

Wherein, the user logs include user identifiers and signalling tracking of key behaviours.

The user identifiers may be one or combination of several of IMSI, IMEI, Packet Temperate Mobile Subscription Identity (P-TMSI), Temporary Mobile Station Identity (TMSI) and the like; and
the signalling tracking of key behaviours includes: switching of a process of UE call, redistribution of radio resources, and cell update-related lub interfaces, Uu interfaces and lu interface signalling.

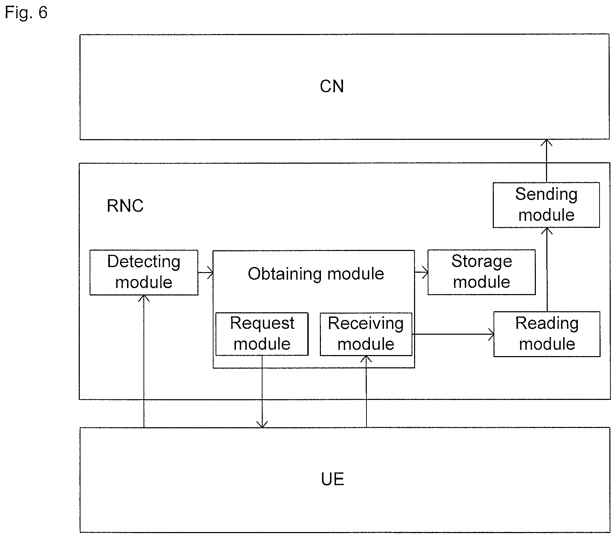

According to another aspect of the disclosure, a RNC for tracking IMEI of UE is provided. Fig. 6 shows a structural diagram of connection of a RNC with a CN and UE; the RNC further includes: an obtaining module and a storage module, wherein
the obtaining module is configured to, when a RNC establishes RRC connection with the UE, obtain IMEI of the UE from an identity response message, which is sent by the UE to respond a non-access stratum identity request message, after success of signalling connection of a UE call; and
the storage module is configured to save the obtained IMEI in a user log generated in the process of the UE call.

The obtaining module may further include: a request module and a receiving module, and the RNC may further include: a reading module, a sending module and a detecting module; wherein
the request module is configured to simulate the non-access stratum identity request message and issue the non-access stratum identity request message to the UE;
the receiving module is configured to receive an identity response message containing the IMEI returned by the UE;
the reading module is configured to read an uplink serial number filled in by the UE in the identity response message;
the sending module is configured to send a null operation compensation message of the uplink serial number filled by the UE in the read identity response message to a CN; and
the detecting module is configured to detect an establishment reason of the UE call, and start the obtaining module to obtain the IMEI after determining that the IMEI needs to be obtained in the UE call.

Interaction of the modules enables the RNC system to generate a corresponding table between a UE call log and user equipment identity, so that the network operation and maintenance analysis system can track specific details of IMEI according to the UE call to reflect specific details of each call of different types of terminal equipments, and perform network maintenance on the different types of terminal equipments.

The above are the further detailed description made to the disclosure in conjunction with specific preferred embodiments, but it should not be considered that these specific embodiments of the disclosure are only limited to these descriptions. Various simple deductions or replacements made by those skilled in the art within the concept of the present disclosure shall fall within the scope of protection of the present disclosure, which is defined by the appended claims.

## Claims

1. A method for tracking an International Mobile Equipment Identity, IMEI, of User Equipment, UE, comprising:
Obtaining (S11), by a Radio Network Controller, RNC, an IMEI of UE from an identity response message, which is sent by the UE to respond a non-access stratum identity request message, after success of signalling connection of a UE call when the RNC establishes Radio Resource Control, RRC, connection with the UE; and
Saving (S12), by the RNC, the obtained IMEI in a user log generated in a process of the UE call;
wherein the user log comprises a user identifier and signalling tracking of key behaviours; and
the signalling tracking of key behaviours comprises: switching of a process of UE call, redistribution of radio resources, cell update-related lub interfaces, Uu interfaces and lu interface signalling.

2. The method according to claim 1, wherein the success of the signalling connection refers to success of lu interface packet domain signalling connection or success of lu interface circuit domain signalling connection.

3. The method according to claim 1, wherein the success of the signalling connection refers to success of lu interface packet domain signalling connection; the obtaining, by a RNC, an IMEI of UE from an identity response message, which is sent by the UE to respond a non-access stratum identity request message comprises:
simulating, by the RNC, the non-access stratum identity request message and issuing the non-access stratum identity request message to the UE;
returning, by the UE, an identity response message containing the IMEI to the RNC after receiving the non-access stratum identity request message; and
obtaining, by the RNC, the IMEI from the identity response message.

4. The method according to claim 1, wherein the success of the signalling connection refers to success of lu interface circuit domain signalling connection; the obtaining, by a RNC, an IMEI of UE from an identity response message, which is sent by the UE to respond a non-access stratum identity request message comprises:
simulating, by the RNC, the non-access stratum identity request message and issuing the non-access stratum identity request message to the UE;
returning, by the UE, an identity response message containing the IMEI to the RNC after receiving the non-access stratum identity request message;
obtaining, by the RNC, the IMEI from the identity response message; and
reading, by the RNC, an uplink serial number filled in by the UE in the identity response message and sending a null operation compensation message about the uplink serial number to a Core Network, CN.

5. The method according to claim 3 or 4, further comprising: before the obtaining, by a RNC, an IMEI of UE from an identity response message, which is sent by the UE to respond a non-access stratum identity request message,
detecting, by the RNC, an establishment reason of the UE call, and determining that the IMEI needs to be obtained in the UE call.

6. The method according to claim 2, wherein the obtaining, by a RNC, an IMEI of UE from an identity response message, which is sent by the UE to respond a non-access stratum identity request message comprises:
issuing, by a CN, the non-access stratum identity request message to the UE;
returning, by the UE, an identity response message containing the IMEI to the RNC after receiving the non-access stratum identity request message;
obtaining, by the RNC, the IMEI from the identity response message; and
reporting, by the RNC, the identity response message to the CN.

7. The method according to claim 1, further comprising: after saving, by the RNC, the obtained IMEI in the user log generated in the process of the UE call,
generating, by a network operation and maintenance analysis system, an International Mobile Subscriber Identity, IMSI, and IMEI comparison table used for user system maintenance according to IMEI information; or
updating, by the network operation and maintenance analysis system, an IMSI and IMEI comparison table used for user system maintenance according to the IMEI information.

8. A Radio Network Controller, RNC, for tracking an International Mobile Equipment Identity, IMEI, of User Equipment, UE, comprising: an obtaining module and a storage module, wherein
the obtaining module is configured to, when a RNC establishes Radio Resource Control, RRC, connection with the UE, obtain an IMEI of UE from an identity response message, which is sent by the UE to respond a non-access stratum identity request message after success of signalling connection of a UE call; and
the storage module is configured to save the obtained IMEI in a user log generated in a process of the UE call;
wherein the user log comprises a user identifier and signalling tracking of key behaviours; and
the signalling tracking of key behaviours comprises: switching of a process of UE call, redistribution of radio resources, cell update-related lub interfaces, Uu interfaces and lu interface signalling.

9. The RNC according to claim 8, wherein the obtaining module further comprises:
a request module and a receiving module; wherein
the request module is configured to simulate the non-access stratum identity request message and issue the non-access stratum identity request message to the UE;
the receiving module is configured to receive an identity response message containing the IMEI returned by the UE;
when the success of the signalling connection of the UE call refers to success of lu interface circuit domain signalling connection, the RNC further comprises: a reading module and a sending module, wherein
the reading module is configured to read an uplink serial number filled in by the UE in the identity response message; and
the sending module is configured to send a null operation compensation message of the uplink serial number to a Core Network, CN.

10. The RNC according to claim 9, further comprising:
a detecting module configured to detect an establishment reason of the UE call, and start the obtaining module after determining that the IMEI needs to be obtained in the UE call.

## Patentansprüche

1. Verfahren zur Verfolgung einer internationalen Mobilausrüstungsidentität, IMEI, einer Benutzereinrichtung, UE (engl. User Equipment), umfassend:
das Erhalten (S11), durch eine Funknetzwerksteuerung, RNC (engl. Radio Network Controller), einer IMEI einer UE von einer Identitätsantwortnachricht, die von der UE gesendet wird, um auf eine Nichtzugang-Stratum-Identitätsanfragenachricht zu reagieren, nach erfolgreicher Signalisierungsverbindung eines UE-Anrufs, wenn die RNC Funkressourcensteuerung, RRC (engl. Radio Resource Control)-Verbindung mit der UE herstellt; und
Speichern (S12), durch die RNC, der erhaltenen IMEI in einem Benutzerprotokoll, erzeugt in einem Prozess des UE-Anrufs;
wobei das Benutzerprotokoll einen Benutzeridentifikator und Signalisierungsverfolgung von Schlüsselverhalten umfasst; und
die Signalisierungsverfolgung von Schlüsselverhalten Folgendes umfasst: Umschalten eines Prozesses von UE-Anruf, Neuverteilung von Funkressourcen, Zellaktualisierung-bezogenen Iub-Schnittstellen, Uu-Schnittstellen und Iu-Schnittstellensignalisierung.

2. Verfahren nach Anspruch 1, wobei der Erfolg der Signalisierungsverbindung auf Erfolg von Iu-Schnittstellenpaketdomänen-Signalisierngsverbindung oder Erfolg von Iu-Schnittstellenschaltungsdomänen-Signalisierungsverbindung verweist.

3. Verfahren nach Anspruch 1, wobei der Erfolg der Signalisierungsverbindung auf Erfolg von Iu-Schnittstellenpaketdomänen-Signalisierungsverbindung verweist; das Erhalten, durch eine RNC, einer IMEI oder UE von einer Identitätsantwortnachricht, die von dem UE gesendet wird, um auf eine Nichtzugang-Stratum-Identitätsanfragenachricht zu reagieren, umfasst:
das Simulieren, durch die RNC, der Nichtzugang-Stratum-Identitätsanfragenachricht und Ausgeben der Nichtzugang-Stratum-Identittsanfragenachricht an die UE;
das Zurückgeben, durch die UE, einer Identitätsantwortnachricht, enthaltend die IMEI, an die RNC nach Empfangen der Nichtzugang-Stratum-Identitätsanfragenachricht; und
das Erhalten, durch die RNC, der IMEI von der Identitätsantwortnachricht.

4. Verfahren nach Anspruch 1, wobei der Erfolg der Signalisierungsverbindung auf Erfolg von Iu-Schnittstellenschaltdomänen-Signalisierungsverbindung verweist; das Erhalten, durch eine RNC, einer IMEI einer UE von einer Identitätsantwortnachricht, die von der UE gesendet wird, um auf eine Nichtzugang-Identitätsanfragenachricht zu reagieren, umfasst:
das Simulieren, durch die RNC; der Nichtzugang-Stratum-Identitätsanfragenachricht und Ausgeben der Nichtzugang-Stratum-Identitätsanfragenachricht an die UE;
das Zurückgeben, durch die UE, einer Identitätsantwortnachricht, enthaltend die IMEI, an die RNC nach Empfangen der Nichtzugang-Stratum-Identitätsanfragenachricht;
das Erhalten, durch die RNC, der IMEI von der Identitätsantwortnachricht; und
das Lesen, durch die RNC, einer Uplink-Serienverbindung, ausgefüllt von der UE in der Identitätsantwortnachricht, und Senden einer Nulloperation-Kompensationsnachricht über die Uplink-Seriennummer an ein Kernnetz, CN (engl. Core Network).

5. Verfahren nach Anspruch 3 oder 4, ferner umfassend: vor dem Erhalten, durch eine RNC, einer IMEI einer UE von einer Identitätsantwortnachricht, die von der UE gesendet wird, um auf eine Nichtzugang-Stratum-Identitätsanfragenachricht zu reagieren,
das Erkennen, durch die RNC, eines Erstellungsgrundes des UE-Anrufs und Bestimmen, dass die IMEI in dem UE-Anruf bezogen werden muss.

6. Verfahren nach Anspruch 2, wobei das Erhalten, durch eine RNC, einer IMEI oder UE von einer Identitätsantwortnachricht, die von der UE gesendet wird, um auf eine Nichtzugang-Stratum-Identitätsanfragenachricht zu reagieren, Folgendes umfasst:
Ausgeben, durch ein CN, der Nichtzugang-Stratum-Identitätsanfragenachricht an die UE;
Zurückgeben, durch den UE, einer Identitätsantwortnachricht, enthaltend die IMEI, an die RNC nach dem Empfangen der Nichtzugang-Stratum-Identitätsanfragenachricht;
Erhalten, durch die RNC, der IMEI von der Identitätsantwortnachricht; und
Berichten, durch die RNC, der Identitätsantwortnachricht an das CN.

7. Verfahren nach Anspruch 1, ferner umfassend: nach dem Speichern, durch die RNC, der erhaltenen IMEI in dem Benutzerprotokoll, erzeugt in dem Prozess des UE-Anrufs,
das Erzeugen, durch ein Netzwerk-Betriebs- und - Wartungsanalysesystem, einer internationalen Mobilabonnentenidentität, IMSI (engl. International Mobile Subscriber Identity), und IMEI-Vergleichstabelle, verwendet für Benutzersystemwartug gemäß IMEI-Information; oder
das Aktualisieren, durch das Netzwerk-Betriebs- und Wartungsanalysesystem, einer IMSI- und IMEI-Vergleichstabelle, verwendet für Benutzersystemwartung gemäß der IMEI-Information.

8. Funknetzwerksteuerung, RNC, zur Verfolgung einer internationalen Mobilausrüstungsidentität, IMEI, von der Benutzereinrichtung, UE, umfassend: ein Erhaltungsmodul und ein Speichermodul, wobei
das Erhaltungsmodul konfiguriert ist, um, wenn eine RNC Funkressourcensteuerung, RRC, Verbindung mit der UE einrichtet, eine IMEI einer UE von einer Identitätsantwortnachricht zu erhalten, der von der UE gesendet wird, um auf eine Nichtzugang-Stratum-Identitätsanfragenachricht nach Erfolg von Signalisierungsverbindung eines UE-Anrufs zu reagieren; und
das Speichermodul konfiguriert ist, um die erhaltene IMEI in einem Benutzerprotokoll, erzeugt in einem Prozess des UE-Anrufs, zu speichern;
wobei das Benutzerprotokoll einen Benutzeridentifikator und Signalisierungsverfolgung von Schlüsselverhalten umfasst; und
die Signalisierungsverfolgung von Schlüsselverhalten Folgendes umfasst: Umschalten eines Prozesses von UE-Anruf, Neuverteilung von Funkressourcen, Zellenaktualisierung-bezogene Iub-Schnittstellen, Uu-Schnittstellen, und Iu-Schnittstellensignalisierung.

9. RNC nach Anspruch 8, wobei das Erhaltungsmodul ferner umfasst:
ein Anfragemodul und ein Empfangsmodul; wobei
das Anfragemodul konfiguriert ist, um die Nichtzugang-Stratum-Identitätsanfragenachricht zu simulieren und die Nichtzugang-Stratum-Identitätsanfragenachricht an die UE auszugeben;
das Empfangsmodul konfiguriert ist, um eine Identitätsantwortnachricht, enthaltend die vom der UE zurückgegebene IMEI, zu empfangen;
wenn der Erfolg der Signalisierungsverbindung des UE-Anrufs auf Erfolg von Iu-Schnittstellenschaltungsdomäne-Signalisierungsverbindung verweist, die RNC ferner Folgendes umfasst: ein Lesemodul und ein Sendemodul, wobei
das Lesemodul konfiguriert ist, um eine Uplink-Serienverbindung, ausgefüllt von der UE in der Identitätsantwortnachricht, zu lesen; und
das Sendemodul konfiguriert ist, um eine Nulloperation-Ausgleichsnachricht von der Uplink-Seriennummer an ein Kernnetz, CN, zu senden.

10. RNC nach Anspruch 9, ferner umfassend:
ein Erkennungsmodul, konfiguriert zum Erkennen eines Einrichtungsgrunds des UE-Anrufs und Starten des Erhaltungsmoduls, nachdem bestimmt wurde, das die IMEI in dem UE-Anruf erhalten werden muss.

## Revendications

1. Procédé pour suivre une Identité Internationale d'Equipement Mobile, IMEI, d'Equipement Utilisateur, UE, comprenant :
l'Obtention (S11), par un Contrôleur de Réseau Radio, RNC, d'une IMEI d'UE à partir d'un message de réponse d'identité, qui est envoyé par l'UE pour répondre à un message de demande d'identité de strate de non-accès, après la réussite d'une connexion de signalisation d'un appel UE lorsque le RNC établit une connexion de Contrôle de Ressource Radio, RRC, avec l'UE ; et
la Sauvegarde (S12), par le RNC, de l'IMEI obtenue dans un journal d'utilisateur généré dans un processus de l'appel UE ;
dans lequel le journal d'utilisateur comprend un identificateur d'utilisateur et un suivi de signalisation de comportements clés ; et
le suivi de signalisation de comportements clés comprend : la commutation d'un processus d'appel UE, la redistribution de ressources radio, la signalisation d'interfaces Iub liées à une mise à jour de cellule, d'interfaces Uu et d'interface Iu.

2. Procédé selon la revendication 1, dans lequel la réussite de la connexion de signalisation fait référence à la réussite d'une connexion de signalisation de domaine de paquet d'interface Iu ou à la réussite d'une connexion de signalisation de domaine de circuit d'interface Iu.

3. Procédé selon la revendication 1, dans lequel la réussite de la connexion de signalisation fait référence à la réussite d'une connexion de signalisation de domaine de paquet d'interface Iu ; l'obtention, par un RNC, d'une IMEI d'UE à partir d'un message de réponse d'identité, qui est envoyé par l'UE pour répondre à un message de demande d'identité de strate de non-accès comprend :
la simulation, par le RNC, du message de demande d'identité de strate de non-accès et l'émission du message de demande d'identité de strate de non-accès vers l'UE ;
le retour, par l'UE, d'un message de réponse d'identité contenant l'IMEI au RNC après la réception du message de demande d'identité de strate de non-accès ; et
l'obtention, par le RNC, de l'IMEI à partir du message de réponse d'identité.

4. Procédé selon la revendication 1, dans lequel la réussite de la connexion de signalisation fait référence à la réussite d'une connexion de signalisation de domaine de circuit d'interface Iu ; l'obtention, par un RNC, d'une IMEI d'UE à partir d'un message de réponse d'identité, qui est envoyé par l'UE pour répondre à un message de demande d'identité de strate de non-accès comprend :
la simulation, par le RNC, du message de demande d'identité de strate de non-accès et l'émission du message de demande d'identité de strate de non-accès vers l'UE ;
le retour, par l'UE, d'un message de réponse d'identité contenant l'IMEI au RNC après la réception du message de demande d'identité de strate de non-accès ;
l'obtention, par le RNC, de l'IMEI à partir du message de réponse d'identité ; et
la lecture, par le RNC, d'un numéro de série de liaison montante rempli par l'UE dans le message de réponse d'identité et l'envoi d'un message de compensation d'opération nulle concernant le numéro de série de liaison montante à un Réseau Coeur, CN.

5. Procédé selon la revendication 3 ou 4, comprenant en outre : avant l'obtention, par un RNC, d'une IMEI d'UE à partir d'un message de réponse d'identité, qui est envoyé par l'UE pour répondre à un message de demande d'identité de strate de non-accès,
la détection, par le RNC, d'une raison d'établissement de l'appel UE, et la détermination que l'IMEI a besoin d'être obtenue dans l'appel UE.

6. Procédé selon la revendication 2, dans lequel l'obtention, par un RNC, d'une IMEI d'UE à partir d'un message de réponse d'identité, qui est envoyé par l'UE pour répondre à un message de demande d'identité de strate de non-accès, comprend :
l'émission, par un CN, du message de demande d'identité de strate de non-accès vers l'UE ;
le retour, par l'UE, d'un message de réponse d'identité contenant l'IMEI au RNC après la réception du message de demande d'identité de strate de non-accès ;
l'obtention, par le RNC, de l'IMEI à partir du message de réponse d'identité ; et
le rapport, par le RNC, du message de réponse d'identité au CN.

7. Procédé selon la revendication 1, comprenant en outre : après la sauvegarde, par le RNC, de l'IMEI obtenue dans le journal d'utilisateur généré dans le processus de l'appel UE,
la génération, par un système d'analyse d'exploitation et de maintenance de réseau, d'un tableau de comparaison Identité Internationale d'Abonné Mobile, IMSI, et IMEI, utilisé pour la maintenance de système utilisateur en fonction d'informations IMEI ; ou
la mise à jour, par le système d'analyse d'exploitation et de maintenance de réseau, d'un tableau de comparaison IMSI et IMEI utilisé pour la maintenance de système utilisateur en fonction des informations IMEI.

8. Contrôleur de réseau radio, RNC, pour suivre une Identité Internationale d'Equipement Mobile, IMEI, d'Equipement Utilisateur, UE, comprenant : un module d'obtention et un module de stockage, dans lequel
le module d'obtention est configuré pour, lorsqu'un RNC établit une connexion de Contrôle de Ressource Radio, RRC, avec l'UE, obtenir une IMEI d'UE à partir d'un message de réponse d'identité, qui est envoyé par l'UE pour répondre à un message de demande d'identité de strate de non-accès après la réussite d'une connexion de signalisation d'un appel UE ; et
le module de stockage est configuré pour sauvegarder l'IMEI obtenue dans un journal d'utilisateur généré dans un processus de l'appel UE ;
dans lequel le journal d'utilisateur comprend un identificateur d'utilisateur et un suivi de signalisation de comportements clés ; et
le suivi de signalisation de comportements clés comprend : la commutation d'un processus d'appel UE, la redistribution de ressources radio, la signalisation d'interfaces Iub liées à une mise à jour de cellule, d'interfaces Uu et d'interface Iu.

9. RNC selon la revendication 8, dans lequel le module d'obtention comprend en outre : un module de demande et un module de réception ; dans lequel
le module de demande est configuré pour simuler le message de demande d'identité de strate de non-accès et émettre le message de demande d'identité de strate de non-accès vers l'UE ;
le module de réception est configuré pour recevoir un message de réponse d'identité contenant l'IMEI retourné par l'UE ;
lorsque la réussite de la connexion de signalisation de l'appel UE fait référence à la réussite d'une connexion de signalisation de domaine de circuit d'interface Iu, le RNC comprend en outre : un module de lecture et un module d'envoi, dans lequel
le module de lecture est configuré pour lire un numéro de série de liaison montante rempli par l'UE dans le message de réponse d'identité ; et
le module d'envoi est configuré pour envoyer un message de compensation d'opération nulle du numéro de série de liaison montante à un Réseau Coeur, CN.

10. RNC selon la revendication 9, comprenant en outre :
un module de détection configuré pour détecter une raison d'établissement de l'appel UE, et démarrer le module d'obtention après la détermination que l'IMEI a besoin d'être obtenue dans l'appel UE.
